# EUROPÄISCHE PATENTSCHRIFT

(11) **EP 2 810 135 B1**
(45) Veröffentlichungstag und Bekanntmachung des Hinweises auf die Patenterteilung: **04.10.2017**
(21) Anmeldenummer: 13702972.4
(22) Anmeldetag: 29.01.2013
(51) Int. Cl.: G05D 23/19, F28F 27/00, H01M 10/613

(54) **REGELEINRICHTUNG FÜR DIE REGELUNG EINES KÜHLKREISLAUFS ZUM TEMPERIEREN EINES BATTERIESYSTEMS MIT MEHR ALS EINEM HEIZ- UND/ODER KÜHLELEMENT**
REGULATING DEVICE FOR REGULATING A COOLING CIRCUIT FOR TEMPERATURE CONTROL OF A BATTERY SYSTEM HAVING MORE THAN ONE HEATING AND/OR COOLING ELEMENT
DISPOSITIF DE RÉGLAGE POUR LA COMMANDE D'UN CIRCUIT DE REFROIDISSEMENT POUR TEMPÉRER UN SYSTÈME DE BATTERIES AVEC PLUS D'UN ÉLÉMENT DE CHAUFFAGE ET/OU DE REFROIDISSEMENT

(30) Priorität: 03.02.2012 DE 102012201609
(43) Veröffentlichungstag der Anmeldung: 10.12.2014
(73) Patentinhaber: Robert Bosch GmbH, 70442 Stuttgart (DE); Samsung SDI Co., Ltd., Yongin-si, Gyeonggi-do 446-577 (KR)
(72) Erfinder: WICKERT, Stefan, 73095 Albershausen (DE); LOEW, Christian, 70569 Vaihingen (DE)
(74) Vertreter: Bee, Joachim
(86) Internationale Anmeldenummer: PCT/EP2013/051662
(87) Internationale Veröffentlichungsnummer: WO 2013/113692

(56) Entgegenhaltungen:
- DE-B3-102007 023 057
- US-A1- 2006 060 236
- US-A1- 2009 321 532
- US-A1- 2010 304 193

## Beschreibung

Die vorliegende Erfindung betrifft eine Regeleinrichtung für die Regelung eines Kühlkreislaufs zum Temperieren eines Batteriesystems mit mehr als einem Heiz- und/oder Kühlelement sowie einen Kühlkreislauf und ein Kraftfahrzeug enthaltend eine solche Regeleinrichtung.

### Stand der Technik

Batteriesysteme in Kraftfahrzeugen werden in der Regel in einem bestimmten Temperaturbereich betrieben, um eine möglichst optimale Leistung und Lebensdauer zu erhalten. Es sind verschiedenartigste Temperierungssysteme bekannt, die verwendet werden können, um diese Aufgabe zu gewährleisten. Meist wird ein Kühlkreislauf mit einem flüssigen oder gasförmigen Kühlmittel verwendet, um das Batteriesystem je nach Bedarf zu erwärmen oder abzukühlen und damit im gewünschten Temperaturbereich zu halten. Solche Kühlkreisläufe zum Temperieren eines Batteriesystems weisen in der Regel eine Mehrzahl von Heiz- und/oder Kühlkomponenten auf, wie z. B. eine Klimaanlage und einen Niedertemperatur-Kühler mit einem Ventilator. Es sind nun verschiedenste Konfigurationen denkbar, in denen diese Heiz- und/oder Kühlelemente im Kühlkreislauf angeordnet und kontinuierlich oder diskret, gemischt, zusätzlich oder alternativ zueinander betrieben werden können, um das Kühlmittel im Kühlkreislauf auf eine gewünschte Temperatur zu bringen, um das Batteriesystem im gewünschten Temperaturbereich zu halten.

Allen diesen Konfigurationen ist gemeinsam, dass diese durch verschiedene, kontinuierlich und/oder diskret betriebene Steller für die einzelnen Heiz- und/oder Kühlelemente erreicht werden, die in geeigneten Kombinationen miteinander geschaltet werden können. Diese geeigneten Kombinationen führen dann dazu, dass das Batteriesystem in Abhängigkeit von verschiedenen Rahmenbedingungen entsprechend beheizt oder gekühlt wird.

Im Stand der Technik werden die Steller für die einzelnen Heiz- und/oder Kühlelemente des Kühlkreislaufs abhängig von den Rahmenbedingungen und der Temperatur im Batteriesystem geschaltet. Wird die gewünschte Batterietemperatur nicht erreicht, so wird ein Fehler gemeldet. Dabei ist es erforderlich, die Logik, weiche die Steller schaltet, je nach Konfiguration des Kühlkreislaufs aufwendig anzupassen, die Logik ist komplex und unübersichtlich für die Applikation.

Die Druckschrift D1 offenbart ein Verfahren zum Konditionieren eines Energiespeichersystems für ein in einem geographischen Gebiet befindliches Fahrzeug umfassend die Schritte des Erhaltens von Daten, das Messen einer Temperatur eines Energiespeichersystems, das Beheizen oder Kühlen des Energiespeichersystems in Abhängigkeit der Temperatur.

Die Druckschrift D2 offenbart ein Kühlsystem für ein Energiespeichersystem eines Fahrzeugs. Das Energiespeichersystem hat einen Kühlkreislauf zum Wärmeaustausch mit einer Batterie, wobei mittels eines Kühlers eine Wärmeabfuhr durchgeführt wird und ein Steuergerät anhand einer Mehrzahl von Sensoren ein Ventil ansteuert.

Die Druckschrift D3 offenbart ein System zur Kühlung eines Batteriemoduls.

Die Druckschrift D4 offenbart eine Vorrichtung zur Regelung eines Kühlmittelvolumenstromes einer Kühlvorrichtung mittels einer Einrichtung zur Einstellung des Volumenstromes in Abhängigkeit einer von einem Regelkreis generierten Stellgröße, wobei als Regelkreis eine zwei Regelkreise aufweisende Kaskadenregelung vorgesehen ist.

### Offenbarung der Erfindung

Erfindungsgemäß wird eine Regeleinrichtung für die Regelung eines Kühlkreislaufs mit mehr als einem Heiz- und/oder Kühlelemente zum Temperieren eines Batteriesystems zur Verfügung gestellt, wobei die Regeleinrichtung zwei nacheinander angeordnete Regelstufen umfasst. Bevorzugt sind die beiden Regelstufen unmittelbar aufeinanderfolgend angeordnet. Die erfindungsgemäße Regeleinrichtung ist dadurch gekennzeichnet, dass die erste Regelstufe derart ausgeführt ist, dass in Abhängigkeit von einer oder mehreren Eingangsgrößen eine bestimmte Kühl-/Heizleistung Pₙₒₘ des Kühlkreislaufs oder eine dazu proportionale Größe bestimmbar ist, eine Regelabweichung davon bestimmbar ist und als Stellgröße der ersten Regelstufe aus der Regelabweichung eine gewünschte Temperatur tₙₒₘ des Kühlmittels oder eine dazu proportionale Größe ausgebbar ist; und die zweite Regelstufe derart ausgeführt ist, dass die Stellgröße der ersten Regelstufe der zweiten Regelstufe als Führungsgröße zuführbar ist, eine Regelabweichung davon bestimmbar ist und in Abhängigkeit der Regelabweichung ein abstraktes Signal S_{arb} als Stellgröße der zweiten Regelstufe ausgebbar ist.

Das abstrakte Signal S_{arb} kann dann in Steuerbefehle für die Steller der Mehrzahl von Heiz- und/oder Kühlelementen des Kühlkreislaufs übersetzt werden.

Mit der erfindungsgemäßen Regeleinrichtung wird eine abstrakte Reglerstruktur zur Verfügung gestellt, deren Reglerausgang einfach und ohne aufwendige Anpassungen in unterschiedliche Stellersignale für unterschiedlichste Konfigurationen von Kühlkreisläufen zur Temperierung von Batteriesystemen übertragen werden können. Dazu ist die erfindungsgemäße Regeleinrichtung in zwei Regelstufen kaskadiert. In der ersten Regelstufe wird in Abhängigkeit von bestimmten Eingangsgrößen zunächst eine geforderte Kühl-/Heizleistung oder eine dazu proportionale Größe bestimmt. Aus dieser Größe wird, gegebenenfalls unter Berücksichtigung von Charakteristika des verwendeten Kühlkreislaufs wie z. B. Massestrom und Wärmeübertragung zwischen Batteriesystem und Kühlmittel, als Reglerausgang oder Stellgröße der ersten Regelstufe eine gewünschte Temperatur des Kühlmittels im Kühlkreislauf oder eine dazu proportionale Größe ausgegeben. Diese Stellgröße der ersten Regelstufe wird der zweiten Regelstufe als Führungsgröße zugeführt. Die zweite Regelstufe regelt nun die Kühlmitteltemperatur. In Abhängigkeit der Differenz zwischen der von der ersten Regelstufe vorgegeben Temperatur des Kühlmittels wird in der zweiten Regelstufe die Stellgröße als abstraktes Signal, z. B. einem Zahlenwert, ausgegeben. Dieses abstrakte Signal kann durch eine einfach applizierbare Logik in Steuersignale für die Steller der Mehrzahl von Heiz- und/oder Kühlelementen des jeweiligen Kühlkreislaufs umgesetzt werden. Damit kann die erfindungsgemäße Regeleinrichtung problemlos für eine Vielzahl von verschiedensten Konfigurationen von Kühlkreisläufen verwendet werden, ohne jedes Mal auf die konkrete Ausgestaltung aufwendig angepasst werden zu müssen. Es reicht völlig aus, wenn die Logik zur Übersetzung des Ausgangssignals der Regeleinrichtung in Steuerbefehle der Steller auf die jeweils konkrete Ausgestaltung des Kühlkreislaufs angepasst wird. Die erfindungsgemäße Regeleinrichtung ist darüber hinaus tolerant gegenüber dem Ausfall einzelner Heiz- und/oder Kühlelemente. Aufgrund des verwendeten Regelkreises wird der Ausfall eines Elementes automatisch durch entsprechende Regelung der verbleibenden Elemente ausgeglichen.

Die erfindungsgemäße Regeleinrichtung eignet sich für die Regelung eines Kühlkreislaufs mit mehr als einem Heiz- und/oder Kühlelement zum Temperieren eines Batteriesystems. Im Kühlkreislauf zirkuliert ein Kühlmittel, welches für die Übertragung von Wärmeenergie auf oder Aufnahme von Wärmeenergie aus dem Batteriesystem dient. Um das Batteriesystem in einem vorgegebenen Temperaturbereich halten zu können, weist der Kühlkreislauf eine Mehrzahl von Heiz- und/oder Kühlelementen auf. Geeignete Kühlkreisläufe und Heiz- und/oder Kühlelemente sind dem Fachmann bekannt. Beispielhaft sind als Heiz- und/oder Kühlelemente genannt ein Ventilator, ein Niedrigtemperatur-Kühler, eine Klimaanlage, ein Wärmetauscher.

Die erfindungsgemäße Regeleinrichtung erlaubt in Abhängigkeit einer oder mehrerer Eingangsgrößen die Ausgabe eines abstrakten Signals S_{arb}, welches anschließend durch eine geeignete Logik in Steuerbefehle für die Steller der Mehrzahl von Heiz- und/oder Kühlelementen des Kühlkreislaufs übersetzt werden kann. Dabei können verschiedenste Eingangsgrößen zum Einsatz kommen. Bevorzugt werden solche Eingangsgrößen verwendet, die einen Rückschluss auf eine aktuelle Temperatur des Batteriesystems erlauben oder eine Änderung in der Temperatur des Batteriesystems erwarten lassen. Beispielsweise können als Eingangsgröße(n) für die erste Regelstufe der Regeleinrichtung verwendet werden die aktuelle Leistung, mit der die Batterie ge- oder entladen wird, die aktuelle thermische Leistung der Batterie, die aktuelle maximale Kühl-/Heizleistung des Kühlkreislaufs, die aktuelle Umgebungstemperatur, der aktuelle Ladezustand der Batterie, die aktuelle Batterietemperatur, eine aktuelle Kühl-/Heizleistung des Kühlkreislaufs, eine Temperaturdifferenz zwischen gemessener und gewünschter Batterietemperatur, eine maximale Temperatur der Batterie oder einzelner Batteriezellen, eine Größe, die zu einer der vorgenannten Größen proportional ist und/oder eine Kombination von mehreren oder allen der vorgenannten Größen.

Die erste Regelstufe der erfindungsgemäßen Regeleinrichtung kann als PI-Regler, also einem Regler mit proportional-integralem Verhalten ausgeführt sein. PI-Regler sind dem Fachmann bekannt und können als kompatible und leicht zu applizierende Bauteile kostengünstig bereitgestellt werden.

Vorzugsweise ist der PI-Regler als kennfeldbasierter PI-Regler ausgeführt. Dabei kann der P-Anteil des PI-Reglers der ersten Regelstufe der erfindungsgemäßen Regeleinrichtung ein oder mehrere Kennfelder umfassen, aus denen für die jeweils verwendete Eingangsgröße(n) eine vorbestimmte Kühl-/Heizleistung Pₙₒₘ des Kühlkreislaufs oder eine dazu proportionale Größe ermittelt werden kann. Die Ausführung als kennfeldbasierter P-Anteil eines PI-Reglers hat den Vorteil der einfachen Umsetzbarkeit und der Abhängigkeit von nur wenigen allgemeinen Batterie- und Fahrzeugparametern.

Der I-Anteil des PI-Reglers der ersten Regelstufe kann derart ausgeführt sein, dass aus der Differenz zwischen der bestimmten Kühl-/Heizleistung Pₙₒₘ des Kühlkreislaufs oder der dazu proportionalen Größe und einer gemessenen Kühl-/Heizleistung Pₘₑₛₛ des Kühlkreislaufs oder einer entsprechenden dazu proportionalen Größe eine gewünschte Temperatur tₙₒₘ des Kühlmittels oder eine dazu proportionale Größe als Stellgröße der ersten Regelstufe ermittelt wird. Alternativ oder zusätzlich kann dieser I-Anteil auch die Abweichung der Batterie-Temperatur zur Soll-Batterie-Temperatur integrieren, der Reglerausgang kann durch geeignete Normierung wiederum eine Soll-Kühlleistung sein. Die Umrechnung einer Kühl-/Heizleistung in einen Kühlmittel-Massenstrom und eine Kühlmitteltemperatur ist nach dem Stand der Technik bekannt. Dabei kann je nach Bedarf und Ausführung des Kühlkreislaufs ein konstanter, variabler oder aktuell gemessener Massestrom des Kühlmittels berücksichtigt werden. In einer bevorzugten Ausführung wird die gewünschte Temperatur tₙₒₘ des Kühlmittels oder die dazu proportionale Größe als Stellgröße der ersten Regelstufe unter Berücksichtigung eines konstanten, variablen oder gemessenen Massestroms ṁ des Kühlmittels im Kühlkreislauf bestimmt.

Um eine Ansteuerung der Steller der Mehrzahl von Heiz- und/oder Kühlelementen zu vermeiden, die schon bei kleinsten Differenzbeträgen zwischen der bestimmten Kühl-/Heizleistung Pₙₒₘ des Kühlkreislaufs oder der dazu proportionalen Größe und einer gemessenen Kühl-/Heizleistung Pₘₑₛₛ des Kühlkreislaufs oder einer dazu proportionalen Größe ausgelöst werden, kann eine sogenannte "Totzone" um einen Bereich um den Differenzbetrag 0 vorgesehen sein. Der Vorteil einer solchen "Totzone" kann darin bestehen, dass der Kühlkreislauf weniger Belastungen ausgesetzt ist und nicht zu jeder Zeit Stellvorgänge ausgeführt werden müssen. Um eine solche "Totzone" zu gewährleisten, kann beispielsweise der I-Anteil des PI-Reglers der ersten Regelstufe derart ausgeführt sein, dass der Betrag der Differenz zwischen der bestimmten Kühl-/Heizleistung Pₙₒₘ des Kühlkreislaufs oder der dazu proportionalen Größe und einer gemessenen Kühl-/Heizleistung Pₘₑₛₛ des Kühlkreislaufs oder einer dazu proportionalen Größe mit einem Schwellenwert verglichen wird und erst bei Überschreitung dieses Schwellenwertes eine Änderung der Stellgröße der ersten Regelstufe ausgebbar ist. Durch Festlegung des Schwellenwertes wird die Ausdehnung der "Totzone" bestimmt.

Um zu vermeiden, dass im Betrieb der erfindungsgemäßen Regeleinrichtung im I-Anteil des PI-Reglers ein Überlauf entsteht, ein sogenannter "windup"-Effekt, kann der I-Anteil des PI-Reglers mit Anti-"windup"-Maßnahmen ausgestattet sein. Insbesondere kann der I-Anteil des PI-Reglers der ersten Regelstufe derart ausgeführt sein, dass die Integration im I-Anteil begrenzt ist, so dass sichergestellt ist, dass die Leistungsfähigkeit des Kühlkreislaufs nicht überschritten wird (Anti-Windup).

Die erfindungsgemäße Regeleinrichtung zeichnet sich dadurch aus, dass der ersten Regelstufe eine zweite Regelstufe nachgeschaltet ist und dass der Regelausgang oder die Stellgröße der ersten Regelstufe der zweiten Regelstufe als Eingangsgröße oder Führungsgröße zugeführt wird. Dazu ist die zweite Regelstufe derart ausgeführt, dass die Stellgröße der ersten Regelstufe der zweiten Regelstufe als Führungsgröße zuführbar ist, eine Regelabweichung davon bestimmbar ist und in Abhängigkeit der Regelabweichung als Stellgröße der zweiten Regelstufe ein abstraktes Signal S_{arb} ausgebbar ist. Dabei ist die Stellgröße der ersten Regelstufe und die Führungsgröße der zweiten Regelstufe als eine gewünschte Temperatur tₙₒₘ des Kühlmittels oder eine dazu proportionale Größe ausgebildet, bevorzugt wird die gewünschte Temperatur tₙₒₘ des Kühlmittels verwendet. Die zweite Regelstufe ist bevorzugt derart ausgestaltet, dass aus der gewünschten Temperatur tₙₒₘ des Kühlmittels oder der dazu proportionalen Größe und einer entsprechenden Messgröße, also einer gemessenen Temperatur Tₘₑₛₛ des Kühlmittels oder einer entsprechend dazu proportionalen Größe eine Differenz als Regelabweichung bestimmt wird. In Abhängigkeit von der Regelabweichung wird dann ein abstraktes Signal S_{arb} als Stellgröße der zweiten Regelstufe und damit als Regelausgang der erfindungsgemäßen Regeleinrichtung ermittelt und ausgegeben. Die zweite Regelstufe kann dazu als I-Regler, also als Regler mit integralem Verhalten, ausgeführt sein. I-Regler sind dem Fachmann bekannt und können als kompatible und leicht zu applizierende Bauteile kostengünstig bereitgestellt werden. Das abstrakte Signal S_{arb} kann beispielsweise als Zahlenwert ausgebildet sein.

Das abstrakte Signal S_{arb} kann anschließend einer Logik zugeführt werden, die der Übersetzung des abstrakten Signals S_{arb} in konkrete Steuerbefehle für die Steller der Mehrzahl von Heiz-/Kühlelementen des Kühlkreislaufs dient. In dieser Logik kann eine für den konkret zu regelnden Kühlkreislauf spezifische Kennlinie hinterlegt sein, aus der sich für jedes abstrakte Signal S_{arb} der erfindungsgemäßen Regeleinrichtung eine bestimmte Ansteuerung der Steller der Heiz-/Kühlelemente des Kühlkreislaufs ergibt. Die Logik kann dabei auch eine Mehrzahl von unterschiedlichen Kennlinien aufweisen, wobei die Auswahl der jeweiligen Kennlinie für die Übersetzung des abstrakten Signals S_{arb} von weiteren Faktoren abhängen kann. Bei diesen weiteren Faktoren kann es sich beispielsweise um bestimmte Geschwindigkeitszustände des Autos handeln oder um bestimmte Umgebungstemperaturen. Dadurch kann erreicht werden, dass ein bestimmtes abstraktes Signal S_{arb} in Abhängigkeit von weiteren Faktoren zu unterschiedlichen Betriebszuständen der Heiz-/Kühlelemente des Kühlkreislaufs führt.

Die erfindungsgemäße Regeleinrichtung zeichnet sich insbesondere dadurch aus, dass diese leicht und kostengünstig hergestellt werden kann und für eine Vielzahl von verschiedensten Kühlkreisläufen eingesetzt werden kann, unabhängig davon, wie viele Heiz-/Kühlelemente im Kühlkreislauf vorhanden sind und von welcher Art diese Heiz-/Kühlelemente sind. Die Anpassung der erfindungsgemäßen Regeleinrichtung auf die konkrete Ausgestaltung des zu regelnden Kühlkreises kann beispielsweise über die Gestaltung und Hinterlegung von entsprechenden Kennlinien für die Übersetzung des abstrakten Ausgangssignals der Regeleinrichtung in Steuerbefehle an die Steller der Heiz-/Kühlelemente des Kühlkreislaufs erreicht werden.

Die vorliegende Erfindung umfasst daneben auch einen Kühlkreislauf zum Temperieren eines Batteriesystems umfassend eine Mehrzahl von Heiz- und/oder Kühlelementen, wobei der Kühlkreislauf eine oder mehrere erfindungsgemäße Regeleinrichtungen aufweist.

Gegenstand der Erfindung ist auch ein Kraftfahrzeug umfassend eine oder mehrere erfindungsgemäße Regeleinrichtungen oder einen oder mehrere erfindungsgemäße Kühlkreisläufe.

Die vorliegende Erfindung bezieht sich auch auf eine Verwendung einer Kombination aus einem PI-Regler und einem I-Regler für die Regelung eines Kühlkreislaufs mit einer Mehrzahl von Heiz- und/oder Kühlelementen zum Temperieren eines Batteriesystems, wobei der Regelausgang des PI-Reglers vom nachgeschalteten I-Regler als Regeleingang verwendet wird.

Gegenstand der Erfindung ist auch ein Verfahren zur Regelung eines Kühlkreislaufs mit einer Mehrzahl von Heiz- und/oder Kühlelementen zum Temperieren eines Batteriesystems, wobei das erfindungsgemäße Verfahren solche Schritte umfasst, die als Merkmale der erfindungsgemäßen Regeleinrichtung beschrieben sind.

Bei dem in der Erfindung genannten Batteriesystem handelt es sich bevorzugt um ein Batteriesystem mit Lithium-Ionen-Akkumulatoren.

### Zeichnungen

Ausführungsbeispiele der Erfindung werden anhand der Zeichnungen und der nachfolgenden Beschreibung näher erläutert. Es zeigt:

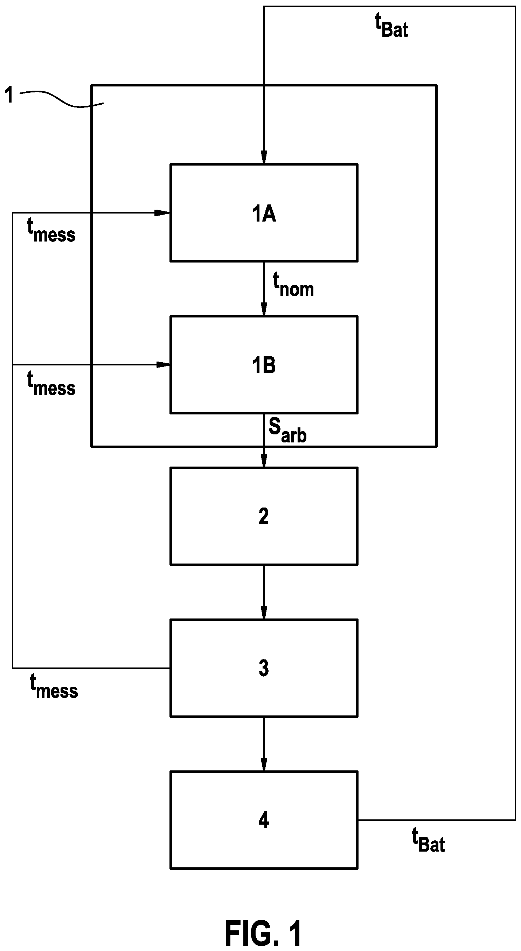

Figur 1 schematisch den Regelkreis einer erfindungsgemäßen Regeleinrichtung in Kombination mit einem Kühlkreislauf und einem zu temperierenden Batteriesystem.

### Ausführungsformen der Erfindung

In der Figur 1 ist schematisch der Regelkreis einer erfindungsgemäßen Regeleinrichtung 1 in Kombination mit einem Kühlkreislauf 3 und einem zu temperierenden Batteriesystem 4 gezeigt.

Die erfindungsgemäße Regeleinrichtung 1 dient der Regelung des Kühlkreislaufs 3 mit mehr als einem Heiz- und/oder Kühlelement zum Temperieren eines Batteriesystems 4. Die Regeleinrichtung 1 weist dazu eine erste Regelstufe 1A und eine der ersten Regelstufe 1A nachgeschaltete, zweite Regelstufe 1B auf. Die Regelstufe 1A ist als PI-Regler ausgestaltet und die zweite Regelstufe 1B als I-Regler.

Als Eingangsgröße wird der ersten Regelstufe 1A der Regeleinrichtung 1 eine aktuelle Batterietemperatur t_{Bat} des Batteriesystems 4 zugeführt. Der PI-Regler der ersten Regelstufe 1A umfasst einen kennfeldbasierten P-Anteil, der aus der Eingangsgröße t_{Bat} eine bestimmte nominelle Kühl-/Heizleistung Pₙₒₘ des Kühlkreislaufs 3 festlegt. Anstatt der nominellen Kühl-/Heizleistung Pₙₒₘ des Kühlkreislaufs 3 kann auch eine dazu proportionale Größe vom Kennfeld bestimmt werden. Der I-Anteil des PI-Reglers der ersten Regelstufe 1A legt aus dieser nominellen Kühl-/Heizleistung Pₙₒₘ des Kühlkreislaufs 3 und unter Berücksichtigung einer gemessenen aktuellen Kühl-/Heizleistung Pₘₑₛₛ des Kühlsystems 3 eine Regelabweichung fest, z. B. durch Bildung einer Differenz der beiden Größen. Alternativ oder zusätzlich kann der I-Anteil auch die Regeldifferenz der Batterie-Temperatur verwenden. In Abhängigkeit vom Wert dieser Regelabweichung gibt der PI-Regler der ersten Regelstufe 1A eine Stellgröße aus, die als bestimmte, nominelle Kühlleistung Pₙₒₘ oder Temperatur tₙₒₘ des Kühlmittels des Kühlkreislaufs 3 oder als eine dazu proportionale Größe ausgebildet ist. Bei der Festlegung der Stellgröße der ersten Regelstufe 1A wird die bestimmte, nominelle Temperatur tₙₒₘ des Kühlmittels des Kühlkreislaufs 3 aus Pₙₒₘ unter Berücksichtigung eines konstanten, variablen oder gemessenen Massestroms ṁ des Kühlmittels im Kühlkreislauf 3 berechnet.

Die Stellgröße der ersten Regelstufe 1A wird der zweiten Regelstufe 1B als Führungsgröße oder Eingangswert zugeführt. Die zweite Regelstufe 1B ist als I-Regler ausgebildet. In der zweiten Regelstufe 1B wird eine Regelabweichung bestimmt aus einer Differenz der bestimmten, nominellen Temperatur tₙₒₘ des Kühlmittels oder der dazu proportionalen Größe und einer entsprechenden Messgröße, der aktuell gemessenen Temperatur Tₘₑₛₛ des Kühlmittels oder einer entsprechend dazu proportionalen Größe. In Abhängigkeit von der Regelabweichung der zweiten Regelstufe 1B wird dann ein abstraktes Signal S_{arb} als Stellgröße der zweiten Regelstufe 1B und damit als Regelausgang der erfindungsgemäßen Regeleinrichtung 1 ermittelt und ausgegeben.

Dieses abstrakte Signal S_{arb} wird anschließend einer Logik 2 zugeführt, die der Übersetzung des abstrakten Signals S_{arb} in konkrete Steuerbefehle für die Steller der Mehrzahl von Heiz-/Kühlelementen des Kühlkreislaufs 3 dient. In dieser Logik 2 ist eine für den konkreten Kühlkreislauf 3 spezifische Kennlinie hinterlegt, aus der sich für jedes abstrakte Signal S_{arb} der erfindungsgemäßen Regeleinrichtung 1 eine bestimmte Ansteuerung der Steller der Heiz-/Kühlelemente des Kühlkreislaufs 3 ergibt. Die Logik 2 kann dabei auch eine Mehrzahl von unterschiedlichen Kennlinien aufweisen, wobei die Auswahl der jeweiligen Kennlinie für die Übersetzung des abstrakten Signals S_{arb} von weiteren Faktoren abhängen kann. Bei diesen weiteren Faktoren kann es sich beispielsweise um bestimmte Geschwindigkeitszustände des Autos handeln oder um bestimmte Umgebungstemperaturen. Dadurch kann erreicht werden, dass ein bestimmtes abstraktes Signal S_{arb} in Abhängigkeit von weiteren Faktoren zu unterschiedlichen Betriebszuständen der Heiz-/Kühlelemente des Kühlkreislaufs 3 führt.

Die Logik 2 gibt in Abhängigkeit des abstrakten Signals S_{arb} der Regeleinrichtung 1 Steuerbefehle an die Steller der Mehrzahl von Heiz-Kühlelementen des Kühlkreislaufs 3 ab und beeinflusst so die Temperatur des Kühlmittels im Kühlkreislauf 3, so dass die aktuelle Temperatur tₘₑₛₛ des Kühlmittels der nominellen Temperatur tₙₒₘ des Kühlmittels angenähert wird. Durch die Änderung der aktuellen Temperatur tₘₑₛₛ des Kühlmittels kann der Kühlkreislauf 3 die Temperatur t_{Bat} des Batteriesystems 4 beeinflussen.

Die aktuelle Temperatur tₘₑₛₛ des Kühlmittels des Kühlkreislaufs 3 wird an die Regeleinrichtung 1 zurückberichtet. Dabei wird tₘₑₛₛ in der zweiten Regelstufe 1B verwendet, um die Regelabweichung für die Festlegung des abstrakten Signals S_{arb} zu bestimmen. Nach einer Umrechnung von tₘₑₛₛ in die aktuelle Kühl-/Heizleistung Pₘₑₛₛ des Kühlkreislaufs 3, wird optional Pₘₑₛₛ zur Bestimmung der Regelabweichung in der ersten Regelstufe 1A verwendet, um daraus dann tₙₒₘ zu bestimmen. In der erfindungsgemäßen Regeleinrichtung 1 kann die Umrechnung von tₘₑₛₛ in Pₘₑₛₛ Bestandteil der ersten Regelstufe 1A der erfindungsgemäßen Regeleinrichtung 1 sein oder auch als gesonderte Logik vorliegen.

## Patentansprüche

1. Regeleinrichtung für die Regelung eines Kühlkreislaufs zum Temperieren eines Batteriesystems mit mehr als einem Heiz- und/oder Kühlelement, wobei die Regeleinrichtung zwei nacheinander angeordnete Regelstufen umfasst, wobei die zweite Regelstufe (1B) derart ausgeführt ist, dass die Stellgröße der ersten Regelstufe (1A) der zweiten Regelstufen (1B) als Führungsgröße zuführbar ist, eine Regelabweichung davon bestimmbar ist und in Abhängigkeit der Regelabweichung als Stellgröße der zweiten Regelstufe (1B) ein abstraktes Signal (S_{arb}) ausgebbar ist, **dadurch gekennzeichnet, dass**
die erste Regelstufe (1A) derart ausgeführt ist, dass in Abhängigkeit von einer oder mehreren Eingangsgrößen eine bestimmte Kühl-/Heizleistung (Pₙₒₘ) des Kühlkreislaufs (3) oder eine dazu proportionale Größe bestimmbar ist, eine Regelabweichung davon bestimmbar ist und als Stellgröße der ersten Regelstufe (1A) aus der Regelabweichung eine gewünschte Temperatur (tₙₒₘ) des Kühlmittels oder eine dazu proportionale Größe ausgebbar ist.

2. Regeleinrichtung nach Anspruch 1, wobei das abstrakte Signal (S_{arb}) in Steuerbefehle für die Mehrzahl von Heiz- und/oder Kühlelementen des Kühlkreislaufs (3) übersetzbar ist.

3. Regeleinrichtung nach einem der vorhergehenden Ansprüche, wobei die erste Regelstufe (1A) als PI-Regler (Regler mit proportionalem-integralem Verhalten) ausgeführt ist.

4. Regeleinrichtung nach Anspruch 3, wobei der P-Anteil des PI-Reglers der ersten Regelstufe (1A) ein oder mehrere Kennfelder umfasst, aus denen für die jeweils verwendeten Eingangsgrößen die bestimmte Kühl-/Heizleistung (Pₙₒₘ) des Kühlkreislaufs (3) oder die dazu proportionale Größe ermittelbar ist.

5. Regeleinrichtung nach einem der Ansprüche 3 oder 4, wobei der I-Anteil des PI-Reglers der ersten Regelstufe (1A) derart ausgeführt ist, dass aus der Differenz zwischen der bestimmten Kühl-/Heizleistung (Pₙₒₘ) des Kühlkreislaufs (3) oder der dazu proportionalen Größe und einer gemessenen Kühl-/Heizleistung (Pₘₑₛₛ) des Kühlkreislaufs (3) oder einer dazu proportionalen Größe eine gewünschte Temperatur (tₙₒₘ) des Kühlmittels oder eine dazu proportionale Größe als Stellgröße der ersten Regelstufe (1A) ausgebbar ist.

6. Regeleinrichtung nach Anspruch 5, wobei die gewünschte Temperatur (tₙₒₘ) des Kühlmittels oder die dazu proportionale Größe als Stellgröße der ersten Regelstufe (1A) unter Berücksichtigung eines konstanten, variablen oder gemessenen Massestroms ṁ des Kühlmittels im Kühlkreislauf (3) bestimmbar ist.

7. Regeleinrichtung nach einem der Ansprüche 5 oder 6, wobei der I-Anteil des PI-Reglers der ersten Regelstufe (1A) derart ausgeführt ist, dass der Betrag der Differenz zwischen der bestimmten Kühl-/Heizleistung (Pₙₒₘ) des Kühlkreislaufs (3) oder der dazu proportionalen Größe und einer gemessenen Kühl-/Heizleistung (Pₘₑₛₛ) des Kühlkreislaufs (3) oder einer dazu proportionalen Größe mit einem Schwellenwert verglichen wird und erst bei Überschreitung dieses Schwellenwertes eine Änderung der Stellgröße der ersten Regelstufe (1A) ausgebbar ist.

8. Regeleinrichtung nach einem der Ansprüche 5, 6 oder 7, wobei der I-Anteil des PI-Reglers der ersten Regelstufe (1A) derart ausgeführt ist, dass die Integration im I-Anteil begrenzt ist, so dass sichergestellt ist, dass die Leistungsfähigkeit des Kühlkreislaufs (3) nicht überschritten wird.

9. Regeleinrichtung nach einem der vorhergehenden Ansprüche, wobei die zweite Regelstufe (1B) als I-Regler (Regler mit integralem Verhalten) ausgeführt ist.

10. Regeleinrichtung nach einem der vorhergehenden Ansprüche, wobei die Stellgröße der ersten Regelstufe (1A) und die Führungsgröße der zweiten Regelstufe (1B) als eine gewünschte Temperatur (tₙₒₘ) des Kühlmittels ausgebildet sind.

11. Regeleinrichtung nach einem der vorhergehenden Ansprüche, wobei der Regeleinrichtung (1) als Eingangsgröße für die erste Regelstufe (1A) die aktuelle Leistung, mit der die Batterie ge- oder entladen wird, die aktuelle thermische Leistung der Batterie, die aktuelle maximale Kühl-/Heizleistung des Kühlkreislaufs (3), die aktuelle Umgebungstemperatur, der aktuelle Ladezustand der Batterie, die aktuelle Batterietemperatur, eine Temperaturdifferenz zwischen gemessener und gewünschter Batterietemperatur, eine maximale Temperatur der Batterie oder einzelner Batteriezellen, eine Größe, die zu einer der vorgenannten Größen proportional ist und/oder einer Kombination von mehreren oder allen der vorgenannten Größen zuführbar ist.

12. Kühlkreislauf zum Temperieren eines Batteriesystems umfassend eine Mehrzahl von Heiz- und/oder Kühlelementen, wobei der Kühlkreislauf (3) eine oder mehrere Regeleinrichtungen (1) nach einem der Ansprüche 1 bis 11 aufweist.

13. Kraftfahrzeug umfassend eine oder mehrere Regeleinrichtungen (1) nach einem der Ansprüche 1 bis 11 oder einen Kühlkreislauf (3) gemäß Anspruch 12.

## Claims

1. Regulating device for regulating a cooling circuit for the temperature control of a battery system with more than one heating and/or cooling element, wherein the regulating device comprises two regulating stages disposed one after the other, wherein the second regulating stage (IB) is implemented such that the controlled variable of the first regulating stage (1A) can be fed to the second regulating stage (1B) as a control input, a control deviation thereof can be determined and an abstract signal (S_{arb}) can be output as a controlled variable of the second regulating stage (1B) depending on the control deviation,
**characterized in that**
the first regulating stage (1A) is implemented such that a defined cooling/heating power (Pₙₒₘ) of the cooling circuit (3) or a variable proportional thereto can be determined depending on one or more input variables, a control deviation thereof can be determined and a desired temperature (tₙₒₘ) of the coolant or a variable proportional thereto derived from the control deviation can be output as a controlled variable of the first regulating stage (1A).

2. Regulating device according to Claim 1, wherein the abstract signal (S_{arb}) can be converted into control commands for the plurality of heating and/or cooling elements of the cooling circuit (3).

3. Regulating device according to any one of the preceding claims, wherein the first regulating stage (1A) is implemented as a PI regulator (regulator with proportional-integral behavior).

4. Regulating device according to Claim 3, wherein the P component of the PI regulator of the first regulating stage (1A) comprises one or more characteristic fields, from which the determined cooling/heating power(Pₙₒₘ) of the cooling circuit (3) or the variable proportional thereto can be determined for the respective input variables used.

5. Regulating device according to any one of Claims 3 or 4, wherein the I component of the PI regulator of the first regulating stage (1A) is implemented such that a desired temperature (tₙₒₘ) of the coolant or a variable proportional thereto derived from the difference between the determined cooling/heating power (Pₙₒₘ) of the cooling circuit (3) or the variable proportional thereto and a measured cooling/heating power (Pₘₑₛₛ) of the cooling circuit (3) or a variable proportional thereto can be output as a controlled variable of the first regulating stage (1A).

6. Regulating device according to Claim 5, wherein the desired temperature (tₙₒₘ) of the coolant or the variable proportional thereto can be determined as a controlled variable of the first regulating stage (1A) taking into account a constant, variable or measured mass flow m of the coolant in the cooling circuit (3).

7. Regulating device according to any one of Claims 5 or 6, wherein the I component of the PI regulator of the first regulating stage (1A) is implemented such that the magnitude of the difference between the determined cooling/heating power (Pₙₒₘ) of the cooling circuit (3) or the variable proportional thereto and a measured cooling/heating power (Pmess) of the cooling circuit (3) or a variable proportional thereto is compared with a threshold value and a change of the controlled variable of the first regulating stage (1A) will only be output on exceeding said threshold value.

8. Regulating device according to any one of Claims 5, 6 or 7, wherein the I component of the PI regulator of the first regulating stage (1A) is implemented such that the integration in the I component is limited so as to ensure that the capability of the cooling circuit (3) is not exceeded.

9. Regulating device according to any one of the preceding claims, wherein the second regulating stage (1B) is implemented as an I regulator (regulator with integral behavior).

10. Regulating device according to any one of the preceding claims, wherein the controlled variable of the first regulating stage (1A) and the control input of the second regulating stage (1B) are in the form of a desired temperature (tₙₒₘ) of the coolant.

11. Regulating device according to any one of the preceding claims, wherein the current power with which the battery is being charged or discharged, the current thermal performance of the battery, the current maximum cooling/heating power of the cooling circuit (3), the current ambient temperature, the current state of charge of the battery, the current battery temperature, a temperature difference between the measured and desired battery temperatures, a maximum temperature of the battery or individual battery cells, a variable proportional to one of the above-mentioned variables and/or a combination of a plurality of or all of the above-mentioned variables can be fed to the regulating device (1) as an input variable for the first regulating stage (1A).

12. Cooling circuit for the temperature control of a battery system comprising a plurality of heating and/or cooling elements, wherein the cooling circuit (3) comprises one or a plurality of regulating devices (1) according to any one of Claims 1 to 11.

13. Motor vehicle comprising one or a plurality of regulating devices (1) according to any one of Claims 1 to 11 or a cooling circuit (3) according to Claim 12.

## Revendications

1. Dispositif de régulation pour la régulation d'un circuit de refroidissement destiné à réguler thermiquement un système de batterie, comportant plus d'un élément de chauffage et/ou de refroidissement, dans lequel le dispositif de régulation comprend deux étages de régulation successifs, dans lequel le second étage de régulation (1B) est réalisé de manière que à ce que la grandeur de réglage du premier étage de régulation (1A) puisse être délivrée au second étage de régulation (1B) en tant que grandeur de guidage, à ce qu'un écart de régulation puisse être déterminé à partir de celle-ci et à ce qu'un signal abstrait (S_{arb}) puisse être fourni en sortie en fonction de l'écart de régulation en tant que grandeur de réglage du second étage de régulation (1B), **caractérisé en ce que** le premier étage de réglage (1A) est réalisé de manière à pouvoir déterminer, en fonction d'une ou de plusieurs grandeurs d'entrée, une puissance de refroidissement/de chauffage déterminée (Pₙₒₘ) du circuit de refroidissement (3) ou une grandeur qui y est proportionnelle, à pouvoir déterminer un écart de régulation par rapport à celles-ci et à pouvoir fournir en sortie une température souhaitée (tₙₒₘ) du fluide réfrigérant ou une grandeur qui y est proportionnelle en tant que grandeur de réglage du premier étage de régulation (1A) à partir de l'écart de régulation.

2. Dispositif de régulation selon la revendication 1, dans lequel le signal abstrait (S_{arb}) peut être converti en instructions de commande destinées à la pluralité d'éléments de chauffage et/ou de refroidissement du circuit de refroidissement (3).

3. Dispositif de régulation selon l'une quelconque des revendications précédentes, dans lequel le premier étage de régulation (1A) est réalisé sous la forme d'un régulateur PI (régulateur à comportement proportionnel-intégral).

4. Dispositif de régulation selon la revendication 3, dans lequel la partie P du régulateur PI du premier étage de régulation (1A) comprend un ou plusieurs champs caractéristiques à partir desquels la puissance de chauffage/de refroidissement (Pₙₒₘ) du circuit de refroidissement (3) ou la grandeur qui y est proportionnelle peut être déterminée pour les grandeurs d'entrée respectivement utilisées.

5. Dispositif de régulation selon l'une quelconque des revendications 3 ou 4, dans lequel la partie I du régulateur PI du premier étage de régulation (1A) est réalisée de manière à pouvoir fournir en sortie, à partir de la différence entre la puissance de refroidissement/de chauffage (Pₙₒₘ) du circuit de refroidissement (3) ou de la grandeur qui y est proportionnelle et une puissance de refroidissement/de chauffage mesurée (Pₘₑₛₛ) du circuit de refroidissement (3) ou une grandeur qui y est proportionnelle, une température souhaitée (tₙₒₘ) du fluide réfrigérant ou une grandeur qui y est proportionnelle en tant que grandeur de réglage du premier étage de régulation (1A).

6. Dispositif de régulation selon la revendication 5, dans lequel la température souhaitée (tₙₒₘ) du fluide réfrigérant ou la grandeur qui y est proportionnelle, en tant que grandeur de réglage du premier étage de régulation (1A), peut être déterminée en tenant compte d'un flux massique ***ṁ*** constant, variable ou mesuré du fluide réfrigérant dans le circuit de refroidissement (3).

7. Dispositif de régulation selon l'une quelconque des revendications 5 ou 6, dans lequel la partie I du régulateur PI du premier étage de régulation (1A) est réalisée de manière à comparer la différence entre la puissance de refroidissement/de chauffage déterminée (Pₙₒₘ) du circuit de refroidissement (3) ou la grandeur qui y est proportionnelle et une puissance de refroidissement/de chauffage mesurée (Pₘₑₛₛ) du circuit de refroidissement (3) ou une grandeur qui y est proportionnelle à une valeur de seuil et à pouvoir fournir en sortie une modification de la grandeur de réglage du premier étage de régulation (1A) lorsque ladite valeur de seuil est dépassée.

8. Dispositif de régulation selon l'une quelconque des revendications 5, 6 ou 7, dans lequel la partie I du régulateur PI du premier étage de régulation (1A) est réalisée de manière à limiter l'intégration effectuée dans la partie I afin de garantir le non-dépassement de la capacité du circuit de refroidissement (3).

9. Dispositif de régulation selon l'une quelconque des revendications précédentes, dans lequel le second étage de régulation (1B) est réalisé sous la forme d'un régulateur I (régulateur à comportement intégral).

10. Dispositif de régulation selon l'une quelconque des revendications précédentes, dans lequel la grandeur de réglage du premier étage de régulation (1A) et la grandeur de guidage du second étage de régulation (1B) sont mises en oeuvre sous la forme d'une température souhaitée (tₙₒₘ).

11. Dispositif de régulation selon l'une quelconque des revendications précédentes, dans lequel il est possible de délivrer au dispositif de régulation (1), en tant que grandeur d'entrée destinée au premier étage de régulation (1A), la puissance actuelle avec laquelle la batterie est chargée ou déchargée, la puissance thermique actuelle de la batterie, la puissance maximale actuelle de refroidissement/de chauffage du circuit de refroidissement (3), la température ambiante actuelle, l'état de charge actuel de la batterie, la température actuelle de la batterie, la différence de température entre les températures mesurée et souhaitée de la batterie, une température maximale de la batterie ou d'éléments de batterie individuels, une grandeur qui est proportionnelle à l'une des grandeurs précitées et/ou une combinaison de plusieurs ou de la totalité des grandeurs précitées.

12. Circuit de refroidissement destiné à réguler thermiquement un système de batterie comprenant une pluralité d'éléments de chauffage et/ou de refroidissement, dans lequel le circuit de refroidissement (3) comporte un ou plusieurs dispositifs de régulation (1) selon l'une quelconque des revendications 1 à 11.

13. Véhicule automobile comprenant un ou plusieurs circuits de régulation (1) selon l'une quelconque des revendications 1 à 11 ou un circuit de refroidissement (3) selon la revendication 12.
